(19) Europäisches Patentamt
European Patent Office
Office européen des brevets

(11) **EP 2 669 865 A1**

(12) **EUROPEAN PATENT APPLICATION**

(43) Date of publication:
**04.12.2013 Bulletin 2013/49**

(51) Int Cl.:
***G06T 7/00*** (2006.01)

(21) Application number: **12305603.8**

(22) Date of filing: **31.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Thomson Licensing**
**92130 Issy-les-Moulineaux (FR)**
• **Inria Institut National de Recherche en Informatique et en Automatique**
**78150 Le Chesnay (FR)**

(72) Inventors:
• **Djelouah, Abdelaziz**
**35576 Cesson Sevigne Cedex (FR)**

• **Le Clerc, Francois**
**35576 Cesson Sevigne Cedex (FR)**
• **Perez, Patrick**
**35576 Cesson Sevigne Cedex (FR)**
• **Franco, Jean-Sebastien**
**38334 Saint Ismier (FR)**
• **Boyer, Edmond**
**38334 Saint Ismier (FR)**

(74) Representative: **Perrot, Sébastien**
**Technicolor**
**1-5 rue Jeanne d'Arc**
**92130 Issy Les Moulineaux (FR)**

(54) **Segmentation of a foreground object in a 3D scene**

(57) The invention relates to a method and a module for segmenting a foreground region from a background region in a 3D scene captured by n capturing devices. A reduced number of 3D samples are selected (E3) in the scene. These 3D samples are projected (E4) in each captured image. Foreground probability and background probabilities are computed (E6) for each selected 3D sample based on color models and the projection of these samples in the images These probabilities are used to update (E7) the color models. These probabilities are then re-computed based on the updated color models. These steps are reiterated (E8) until the color models or the foreground and background probabilities of the selected 3D samples converge. A final segmentation (E9) is computed using foreground color models and foreground and background probabilities.

FIG.2

EP 2 669 865 A1

## Description

## Technical field

The present invention relates to a method and a module for segmenting a foreground region from a background region in a three-dimensional scene.

## Prior art

Segmenting foreground objects in images is an important topic in computer vision with numerous applications in scene analysis and reconstruction. The problem has been extensively addressed in the monocular case, and in the multi-ocular case with controlled environments, typically, scenes filmed against a uniformly green or blue background. Multi-view segmentation with general environments is however still a largely unsolved problem, despite the growing interest for multi-view systems.

Segmenting a foreground object in a 3D scene using a multi-view acquisition setup results in the estimation of binary segmentation maps in each view, wherein a first segmentation label is assigned to pixels corresponding to the foreground object and a second segmentation label is assigned to pixels corresponding to the background. The term silhouette will be used hereafter to refer to the regions of these segmentation maps labeled as foreground. A first category of known approaches treat multi-view silhouette extraction and 3D reconstruction simultaneously. For this category, two sub-categories of methods can be distinguished. A first sub-category addresses primarily the 3D segmentation problem, treating silhouettes as noisy inputs from which to extract the best representation. This approach attempts to construct a consistent segmentation of the foreground object in 3D space from estimations of the silhouettes of this object in each view. Solutions are found with well established convergence properties, e.g, using graph cuts, probabilistic frameworks, or convex minimization. A solution illustrating this approach is described in the document "Fast joint estimation of silhouettes and dense 3D geometry from multiple images", K. Kolev, T. Brox, D. Cremers, IEEE PAMI 2011. A second sub-category treats the joint 2D-3D segmentation problem by updating color models for foreground and background in each view. This usually translates in a costly 3-stage pipeline, iteratively alternating between color models updating, image segmentations, and construction of a 3D segmentation of the object, for instance as the 3D visual hull of the silhouettes computed in each view. All resort to a form of conservative and costly binary decision of visual hull occupancy or 2D segmentation, e.g., using graph cuts in the volume. Such an approach is for example described in the document "Automatic 3D object segmentation in multiple views using volumetric graph-cuts" N.D.F Campbell, G. Vogiatzis, C. Hernandez, R. Cipolla, Image Vision Comput, 2010. The convergence properties of these pipelines are difficult to establish and the need for dense 3D reconstruction has a high computational cost.

A second category of known approaches focus on the problem of extracting the silhouettes in each view rather than on segmenting the foreground object in 3D space. The problem of multi-view foreground segmentation in itself has only recently been addressed as a stand-alone topic, and few approaches exist. An initial work discussed in "Silhouette extraction from multiple images of an unknown background", G. Zeng, L. Quan, ACCV 2004, has identified the problem as finding a set of image segmentations consistent with a visual hull, and proposes an algorithm based on geometric elimination of superpixel regions, initialized to an over-segmentation of the silhouette. This deterministic solution proves of limited robustness to inconsistently classified regions and still relies on an explicit 3D model. Some more recent approaches try to address the problem primarily in 2D using more robust, implicit visual hull representations. For example, the document "Silhouette segmentation in multiple views", W. Lee, W. Woo, E. Boyer, IEEE PAMI 2010, gives a probabilistic model of silhouette contributions to other images of pixels over their viewing lines, and alternatively update all views. The proposed pipelines are still quite complex and fall just short of computing the 3D reconstruction itself. Convergence properties of these methods are hard to establish.

## Summary of the invention

The object of the present invention is to alleviate all or part of these defects.

More specifically, an object of the present invention is to propose a multi-view silhouette segmentation avoiding a dense 3D reconstruction at each iteration of the process in order to reduce the computation needs.

The invention proposes a new approach avoiding these defects using a 2D / 3D compromise, avoiding complete dense representations, while encoding the exact specificities of the multi-view segmentation problem.

More specifically, the invention concerns a method for segmenting a foreground region from a background region in a three-dimensional scene, said scene being captured by n capturing devices disposed at several points of view and generating n images or views of the scene, with $n \geq 2$, the method comprising the successive following steps:

　　a) determining a volume in 3D space bounding said foreground region;

b) defining, for each image, a first color model associated to the foreground region within the projection of the bounding volume in the image, and a second color model associated to the background region within the projection of the bounding volume in the image;

c) selecting a plurality of 3D samples inside the bounding volume according to a predetermined law;

d) projecting the selected 3D samples in each image;

e) computing, in each image, the probabilities that the colors associated to the projection of the selected 3D samples belong to the first and second color models;

f) computing, for each one of the selected 3D samples, a probability, called foreground probability, that it belongs to the foreground region in the n images and, for each image, a probability, called background probability, that it belongs to the background region of said image according to the result of step e);

g) updating said first and second color models in each image according to the foreground and background probabilities associated to the 3D samples computed in step f);

h) reiterating steps e) to g) until the first and second color models of the foreground and background probabilities of the selected 3D samples meet a predetermined convergence criterion, the 3D samples belonging to the foreground region being the 3D samples having a foreground probability higher than each one of the background probabilities.

Step b) can be done after step a) or step c).

According to this method, a reduced number of 3D samples is selected in order to reduce the computation needs. In addition, the color models associated to the foreground region and the background region in the bounding volume for each image are defined in the 2D domains defined by the projection of the bounding volume in each view, reducing the complexity of the method in comparison to approaches requiring the reconstruction of a 3D model of the foreground object.

In a preferred embodiment, the method further comprises a step i), after step h), for refining the foreground/ background segmentation in each image according to a predefined optimization criterion based on at least the foreground probabilities of the projections of the selected 3D samples in said image and the matching of the colors of the pixels in said image with the first color model determined for said image in step b) and updated at step g).

Advantageously, said predefined optimization criterion is also based on a constraint favoring the assignment of identical segmentation results, foreground or background, to neighboring pixels.

According to an embodiment, the convergence criterion of step h) is met when the first and second colors models in each image do not vary during at least m consecutive iterations of the method, m being greater than or equal to 2.

In another embodiment, the convergence criterion of step h) is met when the selected 3D samples having a foreground label do not vary during at least m consecutive iterations of the method, m being greater than or equal to 2.

According to an embodiment, the bounding volume is determined by intersecting the visual fields associated to said capturing devices. In a variant, said bounding volume is determined by user inputs.

According to an embodiment, the first and second color models for each image are color histograms in Lab or HSV color space.

According to an embodiment, the selected 3D samples are obtained by applying one of the following samplings over the bounding volume: a regular 3D sampling according to predetermined grid, a random sampling or an adaptive sampling. In the latter case, the adaptive sampling is for example a coarse to fine sampling. In this case, a reduced number of 3D samples is first selected and then, according to the results of step f), other 3D samples are selected in a region of the bounding volume wherein the number of foreground 3D samples is high.

According to an embodiment, in step b) or g), the second color model of the background region in each image is constrained to be consistent with a color model built from the points outside of the projection of the bounding volume in the image.

The invention relates also to a module for segmenting a foreground region from a background region in a three-dimensional scene, said scene being captured by n capturing devices disposed at several points of view and generating n images or views of the scene, with n≥2, the module comprising:

- storage means for storing said n images of the scene, program instructions and data necessary for the operation of the foreground region segmentation module,
- computer means for

  - determining a volume in 3D space bounding said foreground region;
  - computing, for each image, initial estimates of a first color model associated to the foreground region within the projection of the bounding volume in the image, and a second color model associated to the background region within the projection of the bounding volume in the image;
  - selecting a plurality of 3D samples inside the bounding volume according to a predetermined law;
  - projecting the selected 3D samples in each image;

- computing, in each image, the color probabilities that the colors associated to the projection of the selected 3D samples belong to the first and second color models,
- computing, for each one of the selected 3D samples, a probability, called foreground probability, that it belongs to the foreground region in the n images and, for each image, a probability, called background probability, that it belongs to the background region of said image according to the color probabilities,
- updating said first and second color models in each image according to the foreground and background probabilities associated to the 3D samples;
- reiterating said computing and updating operations until the first and second color models of the foreground and background probabilities of the selected 3D samples meet a predetermined convergence criterion; and
- refining the foreground/background segmentation in each view.

**Brief description of the drawings**

- Fig.1 represents a 3D scene having a foreground region and a background region, said scene being captured by two cameras;
- Fig.2 is a flow chart illustrating the steps of the inventive method;
- Fig.3 is a chart illustrating the dependency graph between the variables of the method of Fig.2;
- Fig.4 is a chart illustrating the dependency graph between variables used in the step E9 of the flow chart of Fig.2;
- Fig.5 and Fig.6 are images illustrating the results of the inventive segmentation method, compared to those of a monocular GrabCut segmentation; and
- Fig.7 is a diagram representing schematically a hardware module implementing the steps of Fig.2 according to a particular implementation of the invention.

**Detailed description of preferred embodiments**

In the present description, we consider a set of n calibrated images of a 3D scene captured at an identical time instant by a plurality of capturing devices disposed at several points of view. Each 3D sample s of the scene can be defined by a color tuple $(I_s^1,...,I_s^n)$ where $I_s^j$ is the color representation of the projection of the 3D sample s in the image j.

Color models are defined for the foreground object and the background region in each image. If a 3D sample is part of the foreground object, it means that all corresponding tuple colors should simultaneously be predicted from the foreground color model in their respective images. Conversely, if the sample is not part of the foreground object, it means that there exists one image where the corresponding color of the sample should be predicted from the background color model in this image, the color representations of the 3D sample in all other views being indifferent in that case. Therefore, a classification label $k_s$ can be assigned to each 3D sample s, with values in the label space $K = \{f, b_1, b_2,..., b_n\}$ where f is the foreground label, and $b_i$ is a label meaning that the color representation of the 3D sample in view i excludes it from the foreground.

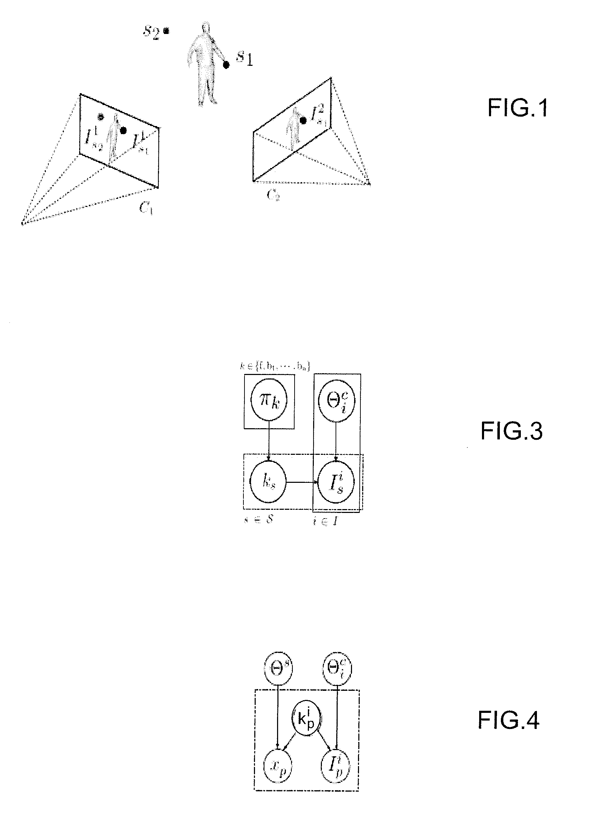

Fig.1 illustrates such a multi-view consistency at 3D sample level. Sample $s_1$ is considered as a foreground sample since all its projections $I_{s1}^1$ and $I_{s1}^2$ are in the foreground regions of the images 1 and 2 generated by the cameras $C_1$ and $C_2$. The foreground label f can thus be assigned to sample $s_1$. Conversely, the sample $s_2$ is considered as a background sample since the color representation of its projection in image $C_1$ marks it as a background pixel, thus excluding it from the foreground. The background label $b_1$ can thus be assigned to sample $s_2$.

According to an important feature of the invention, only sparse 3D samples of the scene are selected for the segmentation and these selected 3D samples are used to accumulate and propagate foreground and background labels between views.

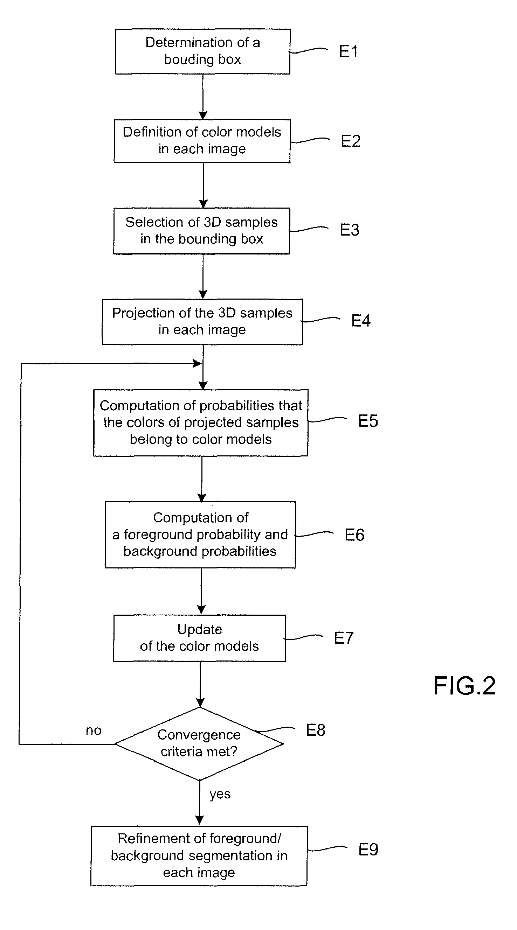

The method of the invention is described in more detail hereinafter. With reference to Fig.2, the method of the invention comprises the following successive steps:

- step E1: determining a volume bounding said foreground region;
- step E2: defining, for each view, a first color model associated to the foreground region in the projection of the bounding volume in the view, and a second color model associated to the background region in the projection of the bounding volume in the view;
- step E3: selecting a plurality of 3D samples of the bounding volume according to a predetermined law;
- step E4: projecting the selected 3D samples in each image;
- step E5: computing, in each image, the probabilities that the colors associated to the projection of the selected 3D samples belong to the first and second color models;
- step E6: computing, for each one of the selected 3D samples, a probability, called foreground probability, that it belongs to the foreground region in the n images and, for each image, a probability, called background probability, that it belongs to the background region of said image according to the result of step E5;
- step E7: updating said first and second color models in each image according to the foreground and background probabilities associated to the 3D samples;
- step E8: reiterating steps E5 to E7 until the first and second color models or the foreground and background probabilities of the selected 3D samples meet a predetermined convergence criterion, the 3D samples belonging to the foreground region being the 3D samples having a foreground label;
- step E9: refining the foreground / background segmentations in each view on the basis of 3D sample foreground/ background probabilities and color models.

Step E1 - determination of a volume bounding the foreground region

This bounding volume is a part or the totality of the common visual field of the cameras. It is for example determined by intersecting the visual fields associated to the cameras capturing the 3D scene. This step is possible since the relative positions of the cameras and their focal distances are known. In fact, the foreground region is considered as belonging to the n images of the scene captured by the n cameras. Thus, this bounding volume defines a volume in space wherein the foreground object is assumed to be present.

Step E2 - definition of color models for foreground and background regions in each image

A color model for the foreground object and a color model for the background region are defined in each image i. These models characterize the color distribution in each image i. The color models are for example color histograms in HSV or Lab color space expressing the complementary nature of foreground and background distributions in each image. The number of occurrences in each bin of the background histograms and foreground histograms, noted respectively $H_i$ and $\overline{H}_i$ for a region $R_i$ in the image i, sum to the number of bin occurrences of the histogram Hint of the whole region $R_i$ ( $H_i^{int} = H_i + \overline{H}_i$ ). In the description to be followed, the region $R_i$ designates the projection of the bounding volume in the image i.

Both the foreground and background color models are fully parameterized by $H_i$, since $H_i^{int}$ is known for each image i. A global color model noted $\theta^c$ such as $\theta^c = \{H_i\}_{i \in \{1,...,n\}}$ is sufficient to define the foreground region and the background region in a scene, since the histograms $\{\overline{H}_i\}_{i \in \{1,...,n\}}$ can be computed from $\left\{ H_i^{int} \right\}_{i \in \{1,...,n\}}$ as the complementary histograms to the $\{H_i\}_{i \in \{1,...,n\}}$.

In addition, the complementary of region $R_i$, noted $R_i^c$ , in the image is initially identified as a background region, yielding a per-image histogram $H_i^{ext}$ . The regions $R_i$ and $R_i^c$ can be obtained automatically: typically $R_i$ can be computed as the projection in view i of the bounding volume determined in step E1, and $R_i^c$ is the complementary of $R_i$ in image i. According to an embodiment of this invention, the pixels of this outer region Rc are used to constrain $H_i$ during initialization and convergence.

In addition, a set of mixing coefficients $\pi_k$, with $k \in K$ , is advantageously defined, each coefficient $\pi_k$ representing the proportion of samples having the state k in a group G of selected samples of the scene (the $\pi_k$ sum to 1).

In this step, the color model can be initialized without making any assumption regarding the foreground/background proportion in image histograms. This means that the background proportion in each bin of the image histogram

$H_i$ is set to 0.5. Thus, at the beginning of the process, the pixels of the region $R_i$ are split equally in the histogram $H_i$ and the histogram $\overline{H}_i$. $H_i$ and $\overline{H}_i$ are substantially identical at the end of this initialization step.

Advantageously, the color model $\theta^c$ is constrained by the fact that there exists a similarity between the background pixels in the region $R_i$ and the pixels in the outer region $R_i^C$ that is a known background region.

This similarity can be used to improve the color model $\theta^c$. In that case, the computation of model $\theta^c$ from the color representations of the 3D samples projections in each view (step E4 to be followed) is constrained to comply with a predefined prior probability defined by:

$$p(\theta^C) = \prod_i \prod_{p \in R_i^c} H_i(I_p^i) \qquad (1)$$

The color model $\theta^c$ is thus optimized by ensuring the background color models are consistent with the colors observed in the known background regions $R_i^C$.

Step E3 - selection of a plurality of 3D samples of the bounding volume according to a predetermined law

A plurality of 3D samples is selected in the bounding volume. The population of the selected 3D samples is supposed to well represent the variety of color co-occurences in the bounding volume. The selected samples can be obtained by applying a regular 3D sampling on the 3D samples within the bounding volume. S designates the set of selected 3D samples and s designates a selected 3D sample.

In a variant, the selected 3D samples are obtained by applying a random sampling. In another variant, the selected 3D samples are obtained by applying an adaptive sampling or a coarse to fine sampling. In the latter case, a reduced number of 3D samples are selected in a first step and, at each iteration of the method, additional 3D samples are selected in the area of the bounding volume wherein the number of foreground 3D samples is high.

Step E4 - projection of the selected 3D samples in each image

According to the invention, the selected 3D samples are projected in each captured image i. $I_s^i$ designates the color representation of the projection of the sample s in the image i and $I = \left\{ I_s^i \right\}_{s \in S, i \in \{1...n\}}$. So the n-tuple $(I_s^1, ..., I_s^n)$ is associated to each sample s of the set S. In each image i, the projections of these 3D samples are included in the region $R_i$, which is the projection of the bounding volume in the image i.

Step E5 - computation of the probabilities that the colors associated to the projection of the selected 3D samples in each image belong to each of the two color models of step E2

According to the invention, each sample's color tuple $I_s^i$ is predicted as illustrated by the dependency graph of Fig.3, according to its classification label $k_s$ with priors $\pi_k$ and to the global color models $\theta_i^C$.

Thus, for $k_s \in K$, $I = \left\{ I_s^i \right\}_{s \in S, i \in \{1...n\}}$, $\theta^C = \left\{ \theta_i^c \right\}_{i \in \{1,...,n\}}$ and $\pi = \{\pi_k\}_{k \in K}$, the joint probability of observations I, latent variables K, and model parameters $\theta^C$ and $\pi$ factorizes as follows:

$$p(\theta^C, I, \pi, K) = p(\theta^C) p(\pi) \prod_{s \in S} p(k_S, I_S^1, \ldots, I_S^n \mid \theta^C, \pi) \qquad (2)$$

where $p(\pi)$ is uniform and will be ignored in the following computations.

From Fig. 3, for a given sample s, we have

$$p(k_S, I_S^1, \ldots, I_S^n \mid \theta^C, \pi) = \left[ \prod_i^n p(I_S^i \mid \theta_i^C, k_S) \right] p(k_S \mid \pi) \qquad (3)$$

If a sample is classified as foreground sample, then all colors from the corresponding tuple should be drawn from the foreground color model. But, if a sample is classified as background sample for the image i (3D sample label is $b_i$) then the i-th color of the tuple should be predicted from the background color model in image i, and the color models in all other views are indifferent, which amounts to drawing these color models in other views from the color model of the entire projection $R_i$ of the bounding volume:

$$p(I_S^i \mid \theta_i^C, k_S) = \begin{cases} H_i(I_S^i) & \text{if } k_S = b_i \\ \overline{H_i}(I_S^i) & \text{if } k_S = f \\ H_i^{int}(I_S^i) & \text{otherwise } (k_S = b_j \text{ with } j \neq i) \end{cases} \qquad (4)$$

Thus, the color representations $I_S^i$ of each 3D sample s in each view i are matched to the color models determined in step E2, and the probabilities of these color representations, conditioned to the color model $\theta^c$ and 3D sample labels $k_S$, are set according to equation (4). This is really where the per view samples classification is performed. A sample satisfying the background color model for a particular image i does not need to be checked against other color models in other images. It just needs to be likely under the color model $H^{int}$ of region $R_i$.

The term $p(k_S|\pi)$ represents a mixture proportion prior

$$p(k_S \mid \pi) = \pi_{k_S} \quad . \qquad (5)$$

Equations (4) and (5) allow to compute the right-hand term of equation (3) as a function of the color model probabilities determined in step e) and of the latent variables $\pi k_S$. The resulting expression can be, in turn, substituted in the right-hand term of equation (2), to obtain the a posteriori probability of the observations I and latent variables K, given the priors on the model parameters $\theta^C$ and $\pi$.

Following the classical Maximum A Posteriori (MAP) statistical estimation method known from prior of art, the estimation of these model parameters is then performed by maximizing the a posteriori probability defined by equation (2) with respect to the values of the model parameters $\theta^C$ and $\pi$. This maximization is the object of the steps E6 and E7, to be followed.

Step E6 - determination, for each 3D sample, of a foreground probability and n background probabilities

For this step, an Expectation Maximization (EM) algorithm is used. EM is an iterative process, which alternates between the posterior over classification variables given the current parameter estimate $\Phi^g$ (E-step), and estimating the new set of parameters $\Phi$ maximizing the expected log-posterior under the previously evaluated probabilities (M-step).

In the present case, $\Phi = \{\theta^c, \pi\}$. The Expectation and Maximization steps are built on the following Q-functional:

$$Q(\Phi,\Phi^g) = \sum_K \log(p(l,K,\Phi))p(K\|l,\Phi^g) \qquad (6)$$

$$Q(\Phi,\Phi^g) = \sum_K \log(\prod_s p(k_s,l_s^1,...,l_s^n\|\Phi))\prod_{s'} p(k_{s'}\|l_{s'}^1,...,l_{s'}^n,\Phi^g)\sum_i \sum_{p\in R_i^c} \log(H_i(l_p^i)) \qquad (7)$$

Simplifying this equation gives the following equation (8)

$$Q(\Phi,\Phi^g) = \sum_s \sum_{k\in K} \log(p(k_s=k,l_s^1,...,l_s^n\|\Phi))p(k_s=k\|l_{s'}^1,...,l_{s'}^n,\Phi^g) + \sum_i \sum_{p\in R_i^c} \log(H_i(l_p^i))$$

and the new set of parameters is $\Phi = \arg\max_\Phi Q(\Phi,\Phi^g)$.

Step E6 corresponds to the E-step, or Expectation step, of the EM algorithm. During this step, the probability that the classification label $k_s$ is equal to k, with $k \in K$, is computed for each 3D sample s by the following expression:

$$\forall k \in K, p(k_s=k\|l_s^1,...l_s^n,\Phi^g) = \frac{\Pi_k^g\left[\prod_i^n p(l_s^i\|\theta_i^{g,c},k_s=k)\right]}{\sum_z \Pi_k^g\left[\prod_i^n p(l_s^i\|\theta_i^{g,c},k_s=z)\right]} \qquad (9)$$

At the end of this step, n+1 probabilities are computed for each 3D sample. $p(k_s=k\|l_s^1,...l_s^n,\Phi^g)$ is noted $p_s^k$ in the following description.

Step E7 - Update of the color models in each image according to the probabilities computed at step E6

Step E7 corresponds to the M-step, or Maximization step, of the EM algorithm. In this step, we find the new set of parameter $\phi$ that maximizes the Q function defined by equation (6). We can write this function as the sum of independent terms:

$$Q(\Phi,\Phi^g) = \sum_{s,k} p_s^k \log \pi_k + \sum_i \left[\sum_{s,k} p_s^k \log(p(l_s^i\|\theta_c^i,k_s=k)) + \sum_{p\in R_i^c} \log(H_i(l_p^i))\right] \qquad (10)$$

Each term can be maximized independently. For $\pi_k$ :

$$\pi_k = \frac{1}{N} \sum_s p_s^k \tag{11}$$

wherein N is the number of selected samples.

Maximizing the image related terms is equivalent to maximizing the expression $A_i(H_i)$ such as

$$A_i(H_i) = \sum_s \left[ p_s^{b_i} \log(H_i(I_s^i)) + p_s^f \log(\overline{H}_i(I_s^i)) \right] + \sum_{p \in R_i^c} \log(H_i(I_p^i)) \tag{12}$$

where we ignore the $b_j$ labels ($j \neq i$) because they are related to the constant model $H_i^{int}$. Let b be a particular bin in the color space. We note by $H_b$ the number of occurrences in b for the histogram H. $H_i^{ext}$ is the histogram of the outer region $R_i^c$. We can then write $A_i(H_i)$ as a sum of independent terms, each one related to a different bin of the color space:

$$A_i(H_i) = \sum_b \sum_{\substack{s \in S \\ I_s^i \in b}} \left[ p_s^{b_i} \log\left(\frac{H_{i,b}}{|H_i|_{L1}}\right) + p_s^f \log\left(\frac{H_{i,b}^{int} - H_{i,b}}{|H_i^{int} - H_i|_{L1}}\right) \right] + \sum_{\substack{p \in R_i^c \\ I_p^i \in b}} \log\left(\frac{H_{i,b}^{ext}}{|H_i^{ext}|_{L1}}\right) \tag{13}$$

wherein L1 is the known norm.

It can be shown that optimizing this quantity is equivalent to updating bin values as follows

$$H_{i,b} = \frac{\sum_{s \in S, I_s^i \in b} p_s^{b_i} + H_{i,b}^{ext}}{\sum_{s \in S, I_s^i \in b} (p_s^{b_i} + p_s^f) + H_{i,b}^{ext}} + H_{i,b}^{int} \tag{14}$$

In this step, the bins of the color model $\theta_i^C = \{H_i\}$ in the image i are updated as indicated by equation (14).

Since $H_i^{int}$ is known for each image i, the bins of the histogram $\overline{H}_i$ can also be computed.

Step E8: reiteration of steps E5 to E7 until a predetermined convergence criterion is met.

The steps E5 to E7 are iterated until the color models or the foreground and background probabilities of the selected 3D samples meet a predetermined convergence criterion.

In a first embodiment, the convergence criterion is met when the color models $\theta_i^C = \{H_i\}$, with i ∈ {1..n}, do not vary during at least m consecutive iterations of the method, m being greater than 2.

In another embodiment, the convergence criterion is met when the selected 3D samples having a foreground label do not vary during at least m consecutive iterations of the method, m being greater than 2.

At the end of this step, a part of the selected 3D samples has a foreground label. These 3D samples are considered as belonging to the foreground region of the scene. The remaining selected 3D samples are considered as belonging to the background region of the scene.

Step E9 - Final Segmentation

The EM scheme described previously will converge to an estimate of the color models for each image and a classification probability table for each 3D sample. Reprojecting the 3D samples in each view, and assigning the 3D sample label (foreground or background) to the resulting pixels, would only yield a sparse image segmentation in each view. This is why we use the obtained estimates to build a final dense 2D segmentation, combining results of sample classifications and color models. This is required only once after convergence. Segmentation amounts then to find for each pixel p of the i$^{th}$ view (image i), the correct labeling $k_p^i$ (foreground or background) according to the model illustrated by Fig.4.

We propose to find the correct per pixel labeling of image i by minimizing the following discrete energy using the graph cut algorithm known from the state of art:

$$E = \sum_p E_d(k_p^i \mid \theta^S, \theta_i^c, x_p, I_p^i) + \sum_{\{p,q\} \in N^i} \lambda E_s(I_p^i, I_q^i) \qquad (15)$$

The data related term, $E_d$, at pixel p depends first, on how likely its color is under color models obtained for image i. It also depends on how its spatial position $x_p$ relates to projections in the image of the set of softly classified 3D samples ($\theta^s$ stands for the 3D samples' positions and associated probabilities $\{p_s^k\}_{s,k}$):

$$E_d(k_p^i \mid \theta^S, \theta_c^i, x_p, I_p^i) = -\log(p(x_p \mid \theta^S, k_p^i)p(I_p^i \mid \theta_i^c, k_p^i)) \qquad (16)$$

- $p(x_p \mid \theta^s, k_p^i)$ is proportional to a Gaussian around projections in the images of 3D samples labeled foreground with a high probability. This allows to smoothly project inferred foreground information.

- $p(I_p^i \mid \theta_i^c, k_p^i)$ is based on foreground or background histograms previously obtained:

$$p(I_i^p \mid \theta_i^c, k_p^i) = \begin{cases} H_i(I_p^i) & \text{if } k_p^i = \text{background} \\ \overline{H_i}(I_p^i) & \text{if } k_p^i = \text{foreground} \end{cases} \qquad (17)$$

$E_s$ is a smoothness term over the set of neighbour pixels ($N_i$) that favors the assignment of identical segmentation labels, foreground or background, to neighboring pixels. It can be any energy that favors consistent labeling in homogeneous regions. In the present case, this energy is a simple inverse distance between neighbor pixels.

Experimental Results

Experiments were done on synthetic and real calibrated multi-view datasets. We used 3D HSV color histograms, with 64 x 64 x 16 bins. In the initialization step, we are not making any assumption regarding the foreground/background proportion in image histograms. This means that background proportion in each bin of the image histogram is set to 0.5. To initialize the bounding volume, we use the common field of view but the method is also entirely compatible with user inputs as is shown in our experiments. Experiments were performed on a 2.0 GHz dual core personal computer with 2GB RAM, with a sequential C++ implementation. Computation time is typically few seconds per iteration, and convergence was reached in less than 10 iterations for all the tests.

The 3D samples can be drawn from any relevant 3D point in space. In practice, we draw samples from the common visibility domain of all cameras. For our initial experiments, we used a regular 3D sampling, and obtained very fast convergence for a small number of samples ($50^3$).

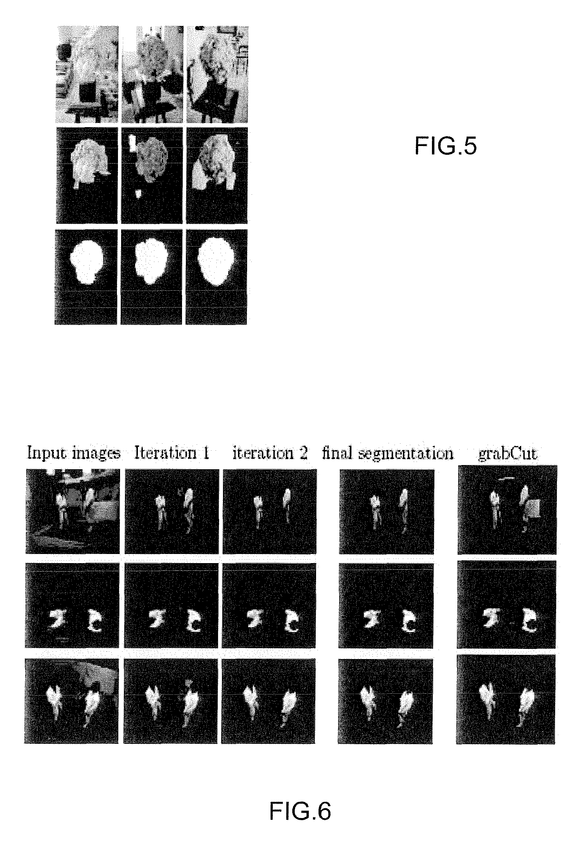

We compare the segmentation results of the present method to a standard GrabCut segmentation to show the advantage of using multiview approach. The different results (Fig. 5 and Fig. 6) illustrate typical GrabCut failure. Indeed, in a monocular approach, it is hard to eliminate background colors that were not present outside the bounding volume. In contrast, the present method benefits from the information of the other views and provides a correct segmentation. In Fig.5, the first row shows the input images of a bust, the second row shows the results with grabCut and the third row shows the final segmentation with the present method. In Fig.6, the first column shows the input images ("Arts martiaux"), the second column shows the segmentation results at the end of a first iteration, the third column shows the segmentation results at the end of a second iteration, the fourth column shows the final segmentation results of the present method and the fifth column shows the GrabCut segmentation results.

The present method offers important advantages over the sate of art methods. No hard decision is taken at any time. This means that samples once labeled as background with high probability, can be relabeled foreground during the convergence of the algorithm if this is consistent in all the views, illustrating the increased stability with respect to existing approaches. Convergence is reached in few seconds which is far better than several minutes in the state of the art methods.

Although the invention has been described in connection to different particular embodiments, it is to be understood that it is in no way limited thereto and that it includes all the technical equivalents of the means described as well as their combinations should these fall within the scope of the claimed invention.

In the case wherein an adaptive sampling is used to select 3D samples in the bounding box, the steps E3 and E4 are introduced in the iteration loop. Additional 3D samples are selected in the area of the bounding box wherein the foreground samples are present.

Another variant of the approach is to use one color histogram to describe foreground regions. This histogram is shared by all the views. Foreground and background histograms are no longer complementary. Nevertheless, the method for segmenting the foreground object from the background described above can still be applied, provided a few modifications are brought to the equations of steps E5 and E7.

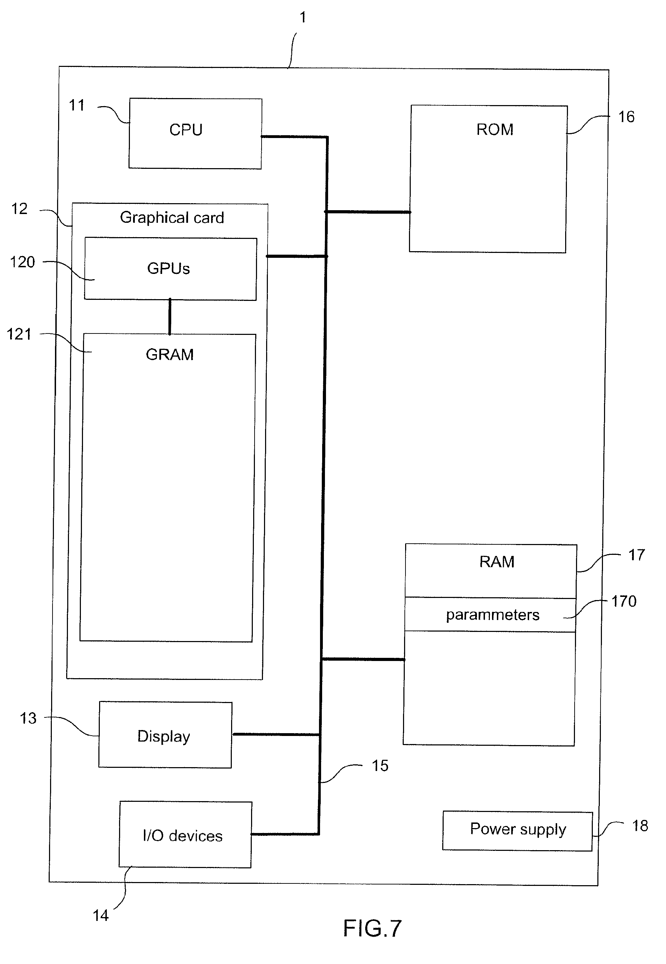

Figure 7 diagrammatically shows a hardware embodiment of a device 1 adapted for the segmentation of a foreground object in 3D scene, according to a particular and non-restrictive embodiment of the invention. The device 1 is for example to a personal computer PC or a laptop.

The device 1 comprises the following elements, connected to each other by a bus 15 of addresses and data that also transports a clock signal:

- a microprocessor 11 (or CPU),
- a graphics card 12 comprising:

  • one or several Graphical Processor Units (or GPUs) 120,
  • a Graphical Random Access Memory (GRAM) 121,

- a non-volatile memory of ROM (Read Only Memory) type 16,
- a Random Access Memory or RAM 17,
- one or several I/O (Input/Output) devices 14 such as for example a keyboard, a mouse, a webcam, and
- a power source 18.

The device 1 also comprises a display device 13 of display screen type directly connected to the graphics card 12 to display notably the display of synthesized images calculated and composed in the graphics card. According to a variant, a display device is external to the device 1 and is connected to the device 1 by a cable transmitting the display signals. The device 1, for example the graphics card 12, comprises a means for transmission or connection (not shown in figure 7) adapted to transmit a display signal to an external display means such as for example an LCD or plasma screen or a video-projector.

When switched on, the microprocessor 11 loads and executes the instructions of the program contained in the RAM 17.

The random access memory 17 notably comprises:

- the operating program of the microprocessor 11 responsible for initializing the device 1,
- the program instructions and data needed for the implementation of the foreground object segmentation algorithm.

Advantageously, the program instructions loaded in the RAM 17 and executed by the microprocessor 11 implement the initialization steps E1 to E4 of the algorithm (shown on Fig. 7), while the computationally intensive steps E5 to E9 are executed on the GPUs 120. To this purpose, the n images or views of the scene, the locations of the projections of the samples in each image computed in step E3, and the initial values of the color models computed in step E2 as well as of the priors $\pi_k$ on the samples labels, are copied from the RAM 17 into the graphical RAM 121. Further, once the parameters 170 representative of the environment are loaded into the RAM 17, the GPU instructions for steps E5 to E9 of the algorithm, in the form of microprograms or "shaders" written for instance in the OpenCL or CUDA shader programming languages, are loaded into the GRAM 121. When the program code reaches step E5 of the algorithm, dedicated CPU instructions transfer the execution of subsequent steps E5 to E9 to said shaders and retrieves the results of the corresponding computations over the bus 15.

**Claims**

1. Method for segmenting a foreground region from a background region in a three-dimensional scene, said scene being captured by n capturing devices disposed at several points of view and generating n images of the scene, with n≥2, the method comprising the successive following steps:

   a) determining (E1) a volume bounding said foreground region;
   b) defining (E2) a first color model associated to the foreground region in the bounding volume and a second color model associated to the background region in the bounding volume for each image;
   c) selecting (E3) a plurality of 3D samples of the bounding volume according to a predetermined law;
   d) projecting (E4) the selected 3D samples in each image;
   e) computing (E5), in each image, the probabilities that the colors associated to the projections of the selected 3D samples belong to the first and second color models;
   f) computing (E6), for each one of the selected 3D samples, a probability, called foreground probability, that it belongs to the foreground region in the n images and, for each image, a probability, called background probability, that it belongs to the background region of said image according to the result of step e);
   g) updating (E7) said first and second color models in each image according to the foreground and background probabilities associated to the 3D samples; and
   h) reiterating (E8) steps e) to g) until the first and second color models or the foreground and background probabilities of the selected 3D samples meet a predetermined convergence criterion, the 3D samples belonging to the foreground region being the 3D samples having a foreground probability higher than each one of the background probabilities.

2. Method according to claim 1, wherein it further comprises a step i) (E9) of refinement of the foreground/background segmentation in each view.

3. Method according to claim 1 or 2, wherein the convergence criterion of step i) is met when the first and second colors models in each image do not vary during at least m consecutive iterations of the method, m being greater than 2.

4. Method according to claim 1 or 2, wherein the convergence criterion of step i) is met when the selected 3D samples having a foreground label do not vary during at least m consecutive iterations of the method, m being greater than 2.

5. Method according to any one of the preceding claims, wherein the bounding volume is determined by intersecting the visual fields associated to said capturing devices.

6. Method according to any one of the claims 1 to 4, wherein said bounding volume is determined by user inputs.

7. Method according to any one of the preceding claims, wherein the first and second color models for each image are color histograms.

8.  Method according to any one of the preceding claims, wherein the selected 3D samples are obtained by applying one of the following samplings on the 3D points within the bounding volume:

    - a regular 3D sampling according to predetermined grid,
    - a random sampling, and
    - an adaptive sampling.

9.  Method according to any one of the preceding claims, wherein the second color model of the background region each image is defined in each image in order to be consistent with the color model of the points outside of the bounding volume.

10. Module for segmenting a foreground region from a background region in a three-dimensional scene, said scene being captured by n capturing devices disposed at several points of view and generating n images or views of the scene, with n≥2, the module comprising:

    - storage means for storing said n images of the scene, program instructions and data necessary for the operation of the foreground segmentation module,
    - computer means for
    - determining a volume in 3D space bounding said foreground region;
    - computing, for each image, initial estimates of a first color model associated to the foreground region within the projection of the bounding volume in the image, and a second color model associated to the background region within the projection of the bounding volume in the image;
    - selecting a plurality of 3D samples inside the bounding volume according to a predetermined law;
    - projecting the selected 3D samples in each image;
    - computing, in each image, the color probabilities that the colors associated to the projection of the selected 3D samples belong to the first and second color models,
    - computing, for each one of the selected 3D samples, a probability, called foreground probability, that it belongs to the foreground region in the n images and, for each image, a probability, called background probability, that it belongs to the background region of said image according to the color probabilities,
    - updating said first and second color models in each image according to the foreground and background probabilities associated to the 3D samples;
    - reiterating said computing and updating operations until the first and second color models of the foreground and background probabilities of the selected 3D samples meet a predetermined convergence criterion; and
    - refining the foreground/background segmentation in each view.

FIG.1

FIG.3

FIG.4

Determination of a
bouding box — E1

Definition of color models
in each image — E2

Selection of 3D samples
in the bounding box — E3

Projection of the 3D samples
in each image — E4

Computation of probabilities that
the colors of projected samples
belong to color models — E5

Computation of
a foreground probability and
background probabilities — E6

Update
of the color models — E7

no — Convergence
criteria met? — E8

yes

Refinement of foreground/
background segmentation in
each image — E9

FIG.2

FIG.5

Input images  Iteration 1   iteration 2  final segmentation   grabCut

FIG.6

FIG.7

Europäisches
Patentamt

European
Patent Office

Office européen
des brevets

## EUROPEAN SEARCH REPORT

Application Number

EP 12 30 5603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WONWOO LEE ET AL: "Identifying Foreground from Multiple Images", 18 November 2007 (2007-11-18), COMPUTER VISION Â ACCV 2007; [LECTURE NOTES IN COMPUTER SCIENCE], SPRINGER BERLIN HEIDELBERG, BERLIN, HEIDELBERG, PAGE(S) 580 - 589, XP019082504, ISBN: 978-3-540-76389-5 * abstract; figures 1, 4 * | 1-10 | INV. G06T7/00 |
| A | US 2006/285747 A1 (BLAKE ANDREW [GB] ET AL) 21 December 2006 (2006-12-21) * the whole document * * Section 3 and 4; page 582 - page 586 * | 1-10 | |
| A | US 2003/058111 A1 (LEE MI-SUEN [US] ET AL) 27 March 2003 (2003-03-27) * the whole document * | 1-10 | |
| A | JIAN SUN ET AL: "Background Cut", 1 January 2006 (2006-01-01), COMPUTER VISION - ECCV 2006 LECTURE NOTES IN COMPUTER SCIENCE;;LNCS, SPRINGER, BERLIN, DE, PAGE(S) 628 - 641, XP019036473, ISBN: 978-3-540-33834-5 * the whole document * | 1-10 | TECHNICAL FIELDS SEARCHED (IPC) G06T |

The present search report has been drawn up for all claims

| Place of search | Date of completion of the search | Examiner |
|---|---|---|
| Munich | 29 November 2012 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 30 5603

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2012

| Patent document cited in search report | | Publication date | Patent family member(s) | | Publication date |
|---|---|---|---|---|---|
| US 2006285747 | A1 | 21-12-2006 | EP | 1891579 A2 | 27-02-2008 |
| | | | JP | 4898800 B2 | 21-03-2012 |
| | | | JP | 2008547097 A | 25-12-2008 |
| | | | KR | 20080015078 A | 18-02-2008 |
| | | | US | 2006285747 A1 | 21-12-2006 |
| | | | US | 2010119147 A1 | 13-05-2010 |
| | | | WO | 2006138730 A2 | 28-12-2006 |
| US 2003058111 | A1 | 27-03-2003 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. KOLEV ; T. BROX ; D. CREMERS.** Fast joint estimation of silhouettes and dense 3D geometry from multiple images. *IEEE PAMI,* 2011
- **N.D.F CAMPBELL ; G. VOGIATZIS ; C. HERNANDEZ ; R. CIPOLLA.** Automatic 3D object segmentation in multiple views using volumetric graph-cuts. *Image Vision Comput,* 2010
- **W. LEE ; W. WOO ; E. BOYER.** Silhouette segmentation in multiple views. *IEEE PAMI,* 2010